# EUROPEAN PATENT SPECIFICATION

(11) **EP 4 588 239 B1**
(45) Date of publication and mention of the grant of the patent: **25.02.2026**
(21) Application number: 23825061.7
(22) Date of filing: 07.12.2023
(51) Int. Cl.: H04N 13/243, H04N 13/25, H04N 13/254, H04N 13/271, H04N 23/698

(54) **MEDICAL CAMERA SYSTEM**
MEDIZINISCHES KAMERASYSTEM
SYSTÈME DE CAMÉRA MÉDICALE

(43) Date of publication of application: 23.07.2025
(60) Divisional application: 25226513.7
(73) Proprietor: Brainlab SE, 81829 München (DE)
(72) Inventor: WEGERTSEDER, Dominik, 81829 Munich (DE); VILSMEIER, Stefan, 81829 Munich (DE); KOLBE, Jannai, 81829 Munich (DE); BIRKENBACH, Rainer, 81829 Munich (DE)
(74) Representative: Maiwald GmbH
(86) International application number: PCT/EP2023/084719
(87) International publication number: WO 2025/119478

(56) References cited:
- EP-A1- 3 462 128
- US-B1- 10 186 301
- US-B2- 10 257 494

## Description

### FIELD OF THE INVENTION

The present invention relates to a medical camera system, an image composition camera device for determining a composite image of a scene and a corresponding method, as well as a multi-filter camera device and a corresponding method.

### TECHNICAL BACKGROUND

Medical camera systems are applied in a medical environment such as an operating room or surgical theatre for monitoring (i.e usage of instruments, tray surveillance, device set-ups/poses, people and their movements), tracking (i.e mono tracking, event/workflow/people tracking, video sources) and/or recording (i.e documentation) tasks.

However, at the moment, for several different camera applications different medical camera systems are available that cannot be integrated into one single medical camera system. Furthermore, the known systems lack in performance and are usually of very high complexity.

The present invention has the object of providing a medical camera system, and in particular medical camera subsystems, i.e. camera devices, with improved performance and/or reduced complexity.

The present invention can be used in connection with Brainlab Navigation Systems, such as Kick^{®} or Curve^{®} or Brainlab Digital OR Systems, such as Buzz^{®} or Buzz Virtual^{®}, all products of Brainlab AG.

Aspects of the present invention, examples and exemplary steps and their embodiments are disclosed in the following. Different exemplary features of the invention can be combined in accordance with the invention wherever technically expedient and feasible.

EP 3 462 128 A1 describes a 3D 360 degree depth projector.

US 10 257 494 B2 describes a reconstruction of three-dimensional video.

### EXEMPLARY SHORT DESCRIPTION OF THE INVENTION

The present invention relates to a multi camera system comprising an image composition camera device and a multi-filter camera device.

The image composition camera device for determining a composite image of a scene, comprises the following: A plurality of visible light cameras, covering a 360 degree view of the scene, wherein each of the plurality of visible light cameras is configured to determine an image of the scene. A plurality of distance sensors, covering a plurality of distance sections of a 360 degree view of the scene, wherein each of the plurality of distance sensors is configured to determine a distance information to a nearest object from the respective distance sensor for at least one of the plurality of distance sections. A processing device, configured to calibrate a camera model of one of the plurality of visible light cameras using the respective determined distance information for each of the plurality of distance sections, and determining a composite image of the scene using the calibrated camera models for each of the plurality of distance sections and the image of the scene from each of the plurality of visible light cameras. Thus, an image composition camera device for determining a composite image of a scene with improved power consumption and better stitching results for a real-time application is provided.

The multi-filter camera device comprises the following: A lens, configured to collect light reflected from a scene. A multi-filter device, configured to determine filtered light from the collected light, wherein the filtered light comprises timely interleaved light of at least two wavelength bands. An image sensor, configured to determine image data from the filtered light, wherein the image data comprises timely interleaved image data corresponding to the at least two wavelength bands. A processing device, configured to process the image data, wherein the processing device comprises at least one video pipeline, wherein each of the at least one video pipeline is configured to process image data corresponding to at least one of the at least two wavelength bands, wherein the processing device comprises a sequencer device, configured to timely manage the image data and the at least one video pipeline. Consequently, a multi-filter camera device supporting different wavelength bands is provided with a more compact structure.

### GENERAL DESCRIPTION OF THE INVENTION

The present invention is defined by the subject-matter of the independent claims. Additional features of the invention are presented in the dependent claims.

In this section, a description of the general features of the present invention is given for example by referring to possible embodiments of the invention.

According to an aspect of the invention, an image composition camera device for determining a composite image of a scene, comprises the following: A plurality of visible light cameras, covering a 360 degree view of the scene, wherein each of the plurality of visible light cameras is configured to determine an image of the scene. A plurality of distance sensors, covering a plurality of distance sections of a 360 degree view of the scene, wherein each of the plurality of distance sensors is configured to determine a distance information to a nearest object from the respective distance sensor for at least one of the plurality of distance sections. A processing device, configured to calibrate a camera model of one of the plurality of visible light cameras using the respective determined distance information for each of the plurality of distance sections, and determining a composite image of the scene using the calibrated camera models for each of the plurality of distance sections and the image of the scene from each of the plurality of visible light cameras.

Consumer 360 degree cameras are usually more optimized for one distance range, usually far away, some can be calibrated for far or near range. Usually an optical flow approach is used optimizing the stitching using the content of the video/pictures. The disadvantage of the optical flow solution is very high computational power needed for the processing, which results in higher cost for hardware and energy/heat dissipation to the environment, and high delay, e.g. several second latency have been measured. This makes it unusable for some of the applications planned for the operation room. Additionally it is still not a good solution for lager field of depth.

The term "scene", as used herein, comprises a three dimensional view of an area, in particular a room, further in particular an operation room. The scene is also referred to as area of interest, which is monitored by the camera system.

The term "composite image", as used herein, relates to an image that is composed, or in other words put together, from a plurality of captured images from different image sources, in particular a camera system comprising a plurality of cameras. This is also referred to as stitching. Preferably, the composite image covers a 360 degree view of the scene.

Preferably, determining the composite image comprises pre-computing a representation of the camera system, preferably comprising a plurality of camera unit spheres and a compositing unit sphere representing the visible light cameras, and creating a composite image from individual camera images of the plurality of visible light cameras, and applying final distortion correction or optimizing parallax correction to the composite image.

Further preferably, pre-computing the representation of the camera system comprises calibrating the representation of the camera system and performing direct alignment or feature based alignment.

Further preferably, creating the composite image from individual camera images of the plurality of cameras comprises finding seam lines amongst camera images that are viewing similar parts of the scene and blending the content of each of the camera images that share a seam line.

Further preferably, determining the composite image comprises using a mathematical lens model and/or a combination matrix of points for transformation from a single camera view to the sphere to model the camera with intrinsic and extrinsic parameters.

Further preferably, determining the composite image comprises using, in particular linear, interpolation between distance models and/or points (for x/y) in the matrix. This should reduce or allow interpolation of the matrices.

Further preferably, determining the composite image comprises using forward projection. This comprises taking each pixel from each visible light camera, transform the coordinate to a position in the sphere or cylinder, potentially weight it and combine it with the pixel from another visible light camera in overlap areas. In other words, the forward projection is used to project points from the camera onto a sphere or cylinder.

Further preferably, determining the composite image comprises using backward projection. This comprises, for each pixel in a resulting sphere or round, transform it to the coordinates of one or more visible light cameras and get the weighted sum from these visible light camera pixels as the target pixel.

The proposed solution determines distance information in several distance sections of the 360 degree view that is used to calibrate a camera model for determining a composite image of the scene for each of the plurality of distance sections in real-time.

The calibration of the camera model, in particular the matrix transformation and interpolation approach can be implemented in hardware like FPGA, ASIC or ASSP to allow this computation in real time.

In other words, instead of using complex stitching and optimization methods to determine the composite image, a camera model is calibrated for each of the plurality of distance sections depending on the distance information of the respective distance sensor, wherein the camera model is configured to be calibrated in a way that based on the distance information a parallax of zero can be achieved between the images of the plurality of visible light cameras in the specific distance to an object of interest.

Preferably, the image composition camera device is comprised by a medical camera system. The medical camera system further preferably is used for data aggregation in an operation room, in particular during a medical procedure.

Preferably, the camera model is configured to be calibrated that a parallax of zero can be achieved at a specific distance between the visible light camera and an object when the composite image of the scene is determined.

Determining the composite image comprises stitching the images of the scene from each of the visible light cameras to a seamless 360 degree image of the scene.

A 360 degree view is used for an immersive experience and seamless data coverage of the scene. Furthermore, mechanical movement, like in pan/tilt/zoom of the cameras), can be avoided, when the 360 degree field covers all parts of the scene in all distances with as less distortion, i.e. gaps and overlaps, as possible.

Preferably, the plurality of visible light cameras and/or the plurality of distance sensors are disposed in a ring shape to cover the 360 degree view of the scene.

For example, the image composition camera device comprises two to six visible light cameras. The image composition camera device further comprises two to six distance sensors.

Preferably, the image composition camera device comprises two visible light cameras, wherein each of the visible light cameras is configured to cover a field of view from 160-230 degree. Thus, the two visible light cameras cover the 360 degree view of the scene without large overlap of the field of view of the two visible light cameras. In order to provide an improved scanning resolution along the 360 degree view of the scene, the image composition camera device comprises six distance sensors, wherein each of the distance sensors is configured to cover a field of view of 55-65 degree. Thus, the six distance sensors cover the 360 degree view of the scene without large overlap of the field of view of the six distance sensors.

The more cameras and sensors are used, the larger is a diameter of an assembly disposing all cameras and sensors in the ring shape. A lager diameter results in more problems in the stitching depending on the distance to the visible light camera, i.e. based on the parallax created by the diameter and the lens imperfections. In particular, for calibrating the camera model of the one of the plurality of visible light cameras, an extrinsic distance is a large factor in parallax creation. The extrinsic distance expresses a distance between the visible light cameras in the image composition camera device, though, as in real life, the plurality of visible light cameras cannot occupy the same physical space at the same point in time. Consequently, there is a trade-off in the amount of visible light cameras and distance sensors, wherein a larger amount of distance sensors enhances the scanning resolution of the image composition camera device but increases a computational effort and also increases the diameter of the ring arrangement of the visible light cameras and distance sensors, introducing more parallax. Parallax is the displacement in the apparent position of an object viewed along different lines of sight. As the plurality of visible light cameras cannot occupy the same physical space, parallax leads to errors in the composite image e.g. in missing information or the double presentation of information. Preferably, the diameter is smaller than 50mm.

Thus, an image composition camera device for determining a composite image of a scene with improved power consumption and better stitching results for a real-time application is provided.

In a preferred embodiment, calibrating the camera model comprises the following: Obtaining a plurality of camera models, being statically pre-calibrated for different distances, and selecting for each of the plurality of distance sections a selected camera model of the plurality of camera models based on the determined distance information of the respective distance section.

Instead of recalibrating the camera model each time a new distance information is provided, the camera model is statically pre-calibrated for different distances. For example, the camera model is pre-calibrated for distances in 10cm increments. Thus, when an updated distance information is provided by the instance sensor, the respective pre-calibrated camera model is selected from the plurality of pre-calibrated camera models.

Thus, the step of calibrating the camera model can be skipped and the computational effort to determine the composite image can be reduced.

Thus, an image composition camera device for determining a composite image of a scene with improved power consumption and better stitching results for a real-time application is provided.

In a preferred embodiment, calibrating the camera model comprises the following: Obtaining a parameterizable calibrated model. Parametrizing, for each of the plurality of distance section, a parametrizable calibrated model based on the determined distance information of the respective distance section.

Instead of fully recalibrating the camera model each time a new distance information is provided, the camera model is parametrizable based on distances. In other words, a parameter of the parametrizable calibrated model comprises the distance information. Thus, not the entire camera model has to be changed when the distance information changes.

Thus, the time of calibrating the camera model can be significantly reduced and the computational effort to determine the composite image can be reduced.

Thus, an image composition camera device for determining a composite image of a scene with improved power consumption and better stitching results for a real-time application is provided.

In a preferred embodiment, the camera model comprises an intrinsic compensation model and an extrinsic compensation model.

Preferably, the camera model is configured to be calibrated in such a way that a parallax of zero can be achieved at a specific distance between the visible light camera and an object. This specific distance is also referred to as alignment distance.

In other words, the camera model, which is also referred to as triple sphere model, can be interpreted as a generalization of a known double sphere approach, wherein the double sphere approach the entire camera system is represented by the double sphere model. The triple sphere model introduces a compositing unit sphere that unifies camera unit spheres, which might for example be represented by a double sphere model each. Thus, a distance between the plurality of cameras, which is referred to as extrinsic distance, is represented by a unified offset. In comparison, the double sphere approach does not consider the distance between the plurality of visible light cameras and as such does not include any unified offset, i.e. it assumes the cameras share the same physical location.

Thus, an image composition camera device for determining a composite image of a scene with improved power consumption and better stitching results for a real-time application is provided.

In a preferred embodiment, the at least one distance sensor is a low resolution distance sensor.

The at least one distance sensor is provided to determine a distance information to a nearest object in the respective distance section covered by the at least one distance sensor. Thus, the distance sensor itself does not need a high resolution.

Thus, an image composition camera device for determining a composite image of a scene with improved power consumption and better stitching results for a real-time application is provided.

In a preferred embodiment, the low resolution distance sensor has a resolution of one of 4x4, 2x2 or 1x1.

As explained, the amount of distance sensors provided in the image composition camera device comes with a trade-off between scanning resolution and computational effort as well as parallax introduction. Preferably, an amount of distance sensors should not exceed six. Thus, a relatively small diameter of the ring arrangement of distance sensors and visible light cameras can be achieved, leading to relatively small parallax introduction.

Providing six low resolution distance sensors with a resolution of 1x1, each of the distance sensors has to cover one of six distance sections with a range of 55-65 degree in order to cover the full 360 degree view of the scene. Using a resolution of 2x2 or 4x4 enhances the scanning resolution to 12 or 24 distance sections. The computational effort of using 24 distance sections is not 24 times as high as using only one distance section, but rather only about two times as high as using only one distance section. Thus, using 12 to 24 distance sections provides a relatively good trade-off between scanning resolution and computational effort.

In a low resolution distance sensor, only the horizontal resolution is used to determine the distance information. The vertical resolution is just ignored. In other words, although a 2x2 low resolution distance sensor provides four distance information, only two of them, horizontal to each other, are used. Thus, although a 4x4 low resolution distance sensor provides sixteen distance information, only four of them, horizontal to each other, are used.

Thus, an image composition camera device for determining a composite image of a scene with improved power consumption and better stitching results for a real-time application is provided.

In a preferred embodiment, an amount of the plurality of visible light cameras is smaller than an amount of the at least one distance sensor.

Preferably, the amount of the plurality of visible light cameras is two, as two visible light cameras can cover the 360 degree view and only two stitching operations and optimizations have to be executed to determine the composite image. On the other side, the amount of the at least one distance sensor is preferably bigger than one, further preferably six in order to increase the scanning resolution of the at least one distance sensor cover the full 360 degree view.

Thus, an optimal trade-off between scanning resolution and computational effort is provided.

Thus, an image composition camera device for determining a composite image of a scene with improved power consumption and better stitching results for a real-time application is provided.

In a preferred embodiment, the plurality of distance sensor are arranged interleaved to the plurality of visible light cameras.

In a preferred embodiment, the plurality of distance sensors comprise one of a Time of Flight sensor and a LIDAR sensor.

Further examples for a distance sensors comprise a range camera and a surface scanner.

Preferably, the plurality of distance sensors provide a 2-dimensional image tracking function.

In a preferred embodiment, the processing device is configured to calibrate the camera model and to determine the composite image in a predetermined time cycle.

For example, the distance information is only obtained each 100ms. Thus, the computation effort is further reduced without loosing too much performance on determining the composite image.

Thus, an image composition camera device for determining a composite image of a scene with improved power consumption and better stitching results for a real-time application is provided.

In a preferred embodiment, the plurality of visible light cameras are large field-of-view cameras.

In comparison, a pinhole camera is suboptimal for viewing angles larger than 120 degrees. Thus, in order to horizontally cover 360 degrees of view, a large quantity of pinhole cameras would be necessary.

In a preferred embodiment, each of the large field-of-view cameras comprise a field-of-view that is at least 160 degrees.

Thus, in order to horizontally cover 360 degrees of view, only two large field-of-view cameras are necessary.

**In** a preferred embodiment, the large field-of-view cameras comprise a camera with a fish-eye lens.

**In** a preferred embodiment, the processing device comprises a hardware processing device .

According to another aspect of the invention, method for determining a composite image of a scene, comprises the following steps. Obtaining, by each of a plurality of visible light cameras, covering a 360 degree view of the scene, an image of the scene. Obtaining, by each of a plurality of distance sensors covering a plurality of distance sections of a 360 degree view of the scene, a distance information to a nearest object from the respective distance sensor for at least one of the plurality of distance sections. Calibrating, by a processing device, for each of the plurality of distance sections a camera model of one of the plurality of visible light cameras using the respective determined distance information. Determining, by the processing device, a composite image of the scene using the calibrated camera models for each of the plurality of distance sections and the image of the scene from each of the plurality of visible light cameras.

Preferably, as least part of the method is a computer-implemented method.

**In** a preferred embodiment, calibrating the camera model comprises the following: Obtaining a plurality of camera models, being statically pre-calibrated for different distances, and selecting for each of the plurality of distance sections a selected camera model of the plurality of camera models based on the determined distance information of the respective distance section.

**In** a preferred embodiment, calibrating the camera model comprises the following: Obtaining a parameterizable calibrated model. Parametrizing, for each of the plurality of distance section, a parametrizable calibrated model based on the determined distance information of the respective distance section.

In a preferred embodiment, the camera model comprises an intrinsic compensation model and an extrinsic compensation model.

In other words, the camera model comprises intrinsic parameters and extrinsic parameters for each visible light camera.

Preferable, the camera model is calibrated such that intrinsic, i.e. the internal parameters of each visible light camera, as well as extrinsic parameters such as rotation and translation of the visible light cameras to each other are known.

In a preferred embodiment, the at least one distance sensor is a low resolution distance sensor.

In a preferred embodiment, the low resolution distance sensor has a resolution of one of 4x4, 2x2 or 1x1.

In a preferred embodiment, an amount of the plurality of visible light cameras is smaller than an amount of the at least one distance sensor.

In a preferred embodiment, the plurality of distance sensor are arranged interleaved to the plurality of visible light cameras.

Thus, stitching in the same area is avoided. Consequently, double stitching is avoided.

In a preferred embodiment, the plurality of distance sensors comprise one of a Time of Flight sensor and a LIDAR sensor.

In a preferred embodiment, the method comprises calibrating, by the processing device, the camera model and to determining the composite image at least every 100ms.

In a preferred embodiment, the plurality of visible light cameras are large field-of-view cameras.

In a preferred embodiment, each of the large field-of-view cameras comprise a field-of-view that is at least 160 degrees.

In a preferred embodiment, the large field-of-view cameras comprise a camera with a fish-eye lens.

In a preferred embodiment, the processing device comprises a hardware processing device.

According to another aspect of the invention, a multi-filter camera device comprises the following: A lens, configured to collect light reflected from a scene. A multi-filter device, configured to determine filtered light from the collected light, wherein the filtered light comprises timely interleaved light of at least two wavelength bands. An image sensor, configured to determine image data from the filtered light, wherein the image data comprises timely interleaved image data corresponding to the at least two wavelength bands. A processing device, configured to process the image data, wherein the processing device comprises at least one video pipeline, wherein each of the at least one video pipeline is configured to process image data corresponding to at least one of the at least two wavelength bands, wherein the processing device comprises a sequencer device, configured to timely manage the image data and the at least one video pipeline.

The term "scene", as used herein, comprises a three dimensional view of an area, in particular a room, further in particular an operation room. The scene is also referred to as area of interest, which is monitored by the multi-filter camera device.

The term "video pipeline", as used herein, relates to a processing video processing device that determines images based on provided image data. For example, an infrared video pipeline provides infrared images from image data of an infrared wavelength band. For example, an RGB video pipeline provides RGB images from image data of a visible light wavelength band.

Multi-filter camera devices are used in an operating room and within products/systems for different applications from documentation, enhanced viewing (endoscope, microscope) and (marker-)tracking. For this applications visible light view and near infrared view are usually used independently depending on the application. In the past video cameras were usually also separated in the class in visible light and IR because one need different filters, optics and sensors. Usually, rather high requirements for framerate, global shutter, high resolution resulting in each of both cameras to be rather big and very pricy on themselves. Thus, a multi-filter camera device allowing to process different wavelength bands suffers from high costs.

Consequently, a multi-filter camera device is provided that uses an reduced amount of parts, in particular, only one image sensor and only one set of optics, i.e. lens.

Preferably, managing the image data and the at least one video pipeline comprises: If the at least one video pipeline comprises at least two video pipeline each being configured to process image data corresponding to one of the at least two wavelength bands, timely distributing the image data to at least two video pipelines, or if the at least one video pipeline comprises one video pipeline, timely switching working parameters of the video pipeline, such that the video pipeline is configured to process the image data corresponding to the at least two wavelength bands, respectively.

Preferably, the multi-filter camera device is comprised by a medical camera system. The medical camera system further preferably is used for data aggregation in an operation room, in particular during a medical procedure.

Preferably, if there are at least two video pipelines, each of the at least two video pipelines is configured to process image data of a specific wavelength band. In other words, each of the at least two video pipelines is dedicated for image data of a specific wavelength band, or in particular image data based on filtered light of a specific wavelength band.

Preferably, the image sensor comprises a colour sensor.

Preferably, the image sensor is configured to determine the image data with a framerate that is at least double a required framerate of the multi-filter camera device.

Preferably, the processing device, or in particular the sequencer device, is configured to synchronize the multi-filter device with the sequencer device. In other words, the multi-filter device is controlled to filter the collected light in accordance with the at least two wavelength bands in a synchronous manner with the sequencer distributing the respective image data to the respective at least two video pipelines. For example, the multi-filter device is controlled to filter the collected light with one of the at least two wavelength bands, for example a first wavelength band, when the sequencer is distributing the respective image data that is determined from the filtered light with the first wavelength band to the video pipeline that is configured to process this kind of image data.

Further preferably, the processing device, or in particular the sequencer device is configured to synchronize the multi-filter device and the image sensor with the sequencer device. Thus, not only the multi-filter device is controlled to be synchronous to the sequencer device but also the image sensor is controlled to be synchronous to the sequencer device, if such control is necessary of the image sensor to process filtered light of different wavelength bands.

Preferably, the at least two wavelength bands comprise a visible light wavelength band and at least one non-visible light wavelength band. The at least one non-visible wavelength band comprises a near infrared wavelength band, an infrared wavelength band and/or an ultraviolet wavelength band.

As the multi-filter camera device provides timely interleaved light of at least two wavelength bands, the multi-filter camera device can process light of different wavelength bands in real-time without stopping the video pipeline to switch a filter to another wavelength band. For example, stopping the video pipeline and switching the filter to an infrared wavelength band and switching the filter back to a visible wavelength band might need up to two seconds, in which the multi-filter camera device is basically blind with respect to the visible light. The multi-filter device allows to switch between the different wavelength bands so fast that the technical boundary rather lies in the framerate of the output video. Given a 30 frames per second video output, in which only one frame per second is provided with light of an infrared wavelength band, the multi-filter camera device is only blind for 1 frame, i.e. around 16 ms.

Thus, the multi-filter camera device allows to switch between different video modes, for example infrared-tracking mode and RGB mode in real-time. In the infrared-tracking mode, an infrared video pipeline provides infrared images based on infrared wavelength band image data. In the RGB mode, an RGB pipeline provides RGB images based on visible light wavelength band image data.

Thus, the multi-filter camera device only uses one image sensor to acquire image data of different wavelength bands.

Consequently, a multi-filter camera device supporting different wavelength bands is provided with a more compact structure.

In a preferred embodiment, the multi-filter device comprises a rotatable flywheel with at least two filters, wherein each of the at least two filters are configured to filter light of one of the at least two wavelength bands.

The rotatable flywheel is disposed between the input optics, i.e. the lens, and the image sensor, in such a way, that only one of the at least two filters is filtering the collected light and filtered light of only one wavelength band is determined by the rotatable flywheel at the same time.

Preferably, the flywheel is in form of a circle comprising a plurality of sections. Each section of the flywheel comprises one filter.

As the flywheel rotates, different sections, and as such filters, of the flywheel cross a light beam of the collected light on its way to the image sensor.

Consequently, an improved multi-filter camera device supporting different wavelength bands is provided.

In a preferred embodiment, the rotatable flywheel comprises a plurality of filters configured to filter light of the same of the at least two wavelength bands.

The flywheel is also referred to as filter wheel.

For example, the rotatable flywheel comprises only one filter for a near infrared wavelength band and a plurality of filters for a visible light wavelength band.

Using more segments, and as such filters, on the flywheel allows reducing the rotation speed of the flywheel. For example, the flywheel is equipped with four filters, two filters for each of the at least two wavelength bands, for a lower rotation speed of the flywheel.

Consequently, an improved multi-filter camera device supporting different wavelength bands is provided.

In a preferred embodiment, the at least two filters are arranged in interleaved sections around the flywheel.

Interleaving the at least two filters around the flywheel allows to shift through the different filters by just rotating the flywheel.

Furthermore, the interleaving of the section allows to control the rotation speed of the flywheel to control the timely interleaved light of the filtered light.

Consequently, an improved multi-filter camera device supporting different wavelength bands is provided.

In a preferred embodiment, the multi-filter camera device comprises an amount of filters configured to filter light of one of the at least two wavelength band is different to an amount of filters configured to filter light of another one of the at least two wavelength bands.

In other words, the multi-filter camera device, in particular the multi-filter device, comprises an asymmetric amount of filters of different wavelength bands.

Consequently, a video, determined by a video pipeline relating to filtered light of the wavelength band with a larger amount of filters has a higher framerate than a video determined by the video pipeline relating to filtered light of the wavelength band with a lower amount of filters.

For example, the multi-filter device comprises six interleaved filters, wherein four filters comprise a first wavelength band and two filters comprise a second wavelength band. The images, i.e. the video, relating to the first wavelength lead to a larger framerate as the images, i.e. the video, relating to the second wavelength.

Preferably, there are more filters for visible light compared to filters for non-visible light, as a higher framerate is usually preferred in the RGB video compared to an infrared, near-infrared or ultraviolet video that is most preferably rather used for tracking.

Further preferably, the multi-filter device comprises a plurality of non-visible light filters. This allows the multi-filter device to be more sensitive on specific different near-infrared, infrared or ultraviolet wavelength bands. This is for example applied in Fluoroscopy applications.

Consequently, an improved multi-filter camera device supporting different wavelength bands is provided.

In a preferred embodiment, the camera device comprises a motor, configured to rotate the flywheel.

The motor rotating the flywheel, allows the processing device to control a rotation speed of the flywheel.

Thus, the processing device is able to synchronize the flywheel, and as such the multi-filter device, with the sequencer device.

Consequently, an improved multi-filter camera device supporting different wavelength bands is provided.

In a preferred embodiment, the sequencer device is configured to distribute the image data based on a position of the flywheel.

The position of the flywheel comprises information of which part of the flywheel is currently disposed in the light beam of the collected light on its way to the image sensor. The position of the flywheel is provided to the processing device and in particular the sequencer device. Thus, the sequencer device get real-time information about the structure of the filtered light, or in other words, which image data at which time corresponds to which wavelength band. Thus, the sequencer can associate the image data of a specific wavelength band to the respective video pipeline in real time.

In other words, the positon of the flywheel indicates a section of the flywheel corresponding to a filter of a specific wavelength band. For example, for each position of the flywheel it is predetermined, which filter with which wavelength band is currently exposed to the collected light. For example for a four section flywheel with interleaved filters A and B, it is predetermined that a position of the flywheel of 0°-90° and 181°-270° relates to filter A and that a position of the flywheel of 91°-180° and 271°-360° relates to filter B.

Thus, the position of the flywheel directly corresponds to the filter exposed to the collected light.

Consequently, an improved multi-filter camera device supporting different wavelength bands is provided.

In a preferred embodiment, the camera device comprises a position sensor, configured to determine the position of the flywheel.

In a preferred embodiment, the sequencer device is configured to determine the position of the flywheel from motor feedback of the motor.

Preferably, the motor is a brushless motor and the motor feedback is a counter electromotive force.

Consequently, an improved multi-filter camera device supporting different wavelength bands is provided.

In a preferred embodiment, the multi-filter device comprises a liquid crystal tuneable filter, wherein the liquid crystal tuneable filter is tuneable to filter light of each of the at least two wavelength bands.

In a preferred embodiment, one of the at least wavelength bands comprises visible light.

The visible light wavelength band comprises a larger bandwidth band than the near infrared light wavelength band and the infrared light wavelength band.

Preferably, for image data based on visible light, the respective video pipeline comprises a regular debayering pipeline.

Consequently, an improved multi-filter camera device supporting different wavelength bands is provided.

In a preferred embodiment, one of the at least wavelength bands comprises near infrared light and/or infrared light.

The near infrared light wavelength band and the infrared light wavelength band comprise a smaller bandwidth band than the visible light wavelength band.

Preferably, for image data based on near infrared and/or infrared light, the respective video pipeline comprises a special debayering pipeline, which is configured to provide sharp monochrome images.

Consequently, an improved multi-filter camera device supporting different wavelength bands is provided.

In a preferred embodiment, one of the at least wavelength bands comprises near ultraviolet light and/or ultraviolet light.

In a preferred embodiment, the image sensor comprises a CMOS image sensor.

Preferably, the image sensor is a Complementary Metal-Oxide-Semiconductor, CMOS, image sensor or a Charged Coupled Device, CCD, image sensor.

In a preferred embodiment, the multi-filter device is arranged before the image sensor.

The multi-filter device can be arranged after the lens. However, the multi-filter device can also be arrange before the lens, as long as the multi-filter device is arranged before the image sensor so that only filtered light arrives at the image sensor.

Consequently, an improved multi-filter camera device supporting different wavelength bands is provided.

In a preferred embodiment, the processing device is configured to determine multi wavelength band images based on the image data.

In other words, the processing device, in particular the at least one video pipeline, determine videos, i.e. images, based on the image data provided by the sequencer device.

The processing device, thus uses the output of the at least one video pipeline to determine a multi wavelength band video, i.e. images, by merging the output of the at least one video pipeline. This allows to create HDR like multi wavelength images, wherein the images of all wavelength bands are blended together in one picture, from the different wavelength band exposures. Thus, basically no calibration of the multi-filter camera device is necessary since for each wavelength band the same lens and image sensor is used.

Thus, the multi-filter camera device provides real-time multi wavelength band videos.

Consequently, an improved multi-filter camera device supporting different wavelength bands is provided.

**In** a preferred embodiment, the light collected by the lens is provided by a light source that is synchronized with the respective one of the at least two filters of the multi-filter device.

**In** other words, if the light source is able to provide light in different wavelength bands, the processing device, in particular the sequencer device, is configured to control the light source to provide the light of the respective wavelength band synchronized with the sequencer device.

Consequently, an improved multi-filter camera device supporting different wavelength bands is provided.

**In** a preferred embodiment, the light source is a flashing light source.

According to another aspect of the invention, a multi-filter image processing method, comprises the following steps: Collecting by a lens, light reflected from a scene. Determining, by a multi-filter device, filtered light from the collected light, wherein the filtered light comprises timely interleaved light of at least two wavelength bands. Determining, by an image sensor, image data from the filtered light, wherein the image data comprises timely interleaved image data corresponding to the at least two wavelength bands. Processing, by a processing device, the image data, wherein processing comprises timely managing, by a sequencer device, the image data and at least one video pipeline of the processing device, wherein the at least one video pipeline processes image data corresponding to at least one of the at least two wavelength bands.

Preferably, at least part of the method is a computer-implemented method.

**In** a preferred embodiment, the multi-filter device comprises a rotatable flywheel with at least two filters, wherein each of the at least two filters are configured to filter light of one of the at least two wavelength bands.

**In** a preferred embodiment, the rotatable flywheel comprises a plurality of filters configured to filter light of the same of the at least two wavelength bands.

**In** a preferred embodiment, the at least two filters are arranged in interleaved sections around the flywheel.

**In** a preferred embodiment, the camera device comprises an amount of filters configured to filter light of one of the at least two wavelength bands is different to an amount of filters configured to filter light of another one of the at least two wavelength bands.

**In** a preferred embodiment, the method comprises rotating the flywheel by a motor of the camera device.

**In** a preferred embodiment, the method comprises distributing, by the sequencer device, the image data based on a position of the flywheel.

**In** a preferred embodiment, the method comprises determining the position of the flywheel by a positioning sensor of the camera device.

**In** a preferred embodiment, the method comprises determining, by the sequencer device, the position of the flywheel from motor feedback of the motor.

**In** a preferred embodiment, the multi-filter device comprises a liquid crystal tuneable filter, wherein the liquid crystal tuneable filter is tuneable to filter light of each of the at least two wavelength bands.

**In** a preferred embodiment, one of the at least wavelength bands comprises visible light.

In a preferred embodiment, one of the at least wavelength bands comprises near infrared light and/or infrared light.

In a preferred embodiment, one of the at least wavelength bands comprises near ultraviolet light and/or ultraviolet light.

In a preferred embodiment, the image sensor comprises CMOS image sensor.

In a preferred embodiment, the multi-filter device is arranged before the image sensor.

In a preferred embodiment, the method comprises determining, by the processing device, multi wavelength band images based on the image data.

In a preferred embodiment, the light collected by the lens is provided by a light source that is synchronized with the respective one of the at least two filters of the multi-filter device.

In a preferred embodiment, the light source is a flashing light source.

According to another aspect, a multi camera system comprises the composite image camera device, as described herein, and the multi-filter camera device, as described herein.

At least part of the invention is directed to a computer program which, when running on at least one processor (for example, a processor) of at least one computer (for example, a computer) or when loaded into at least one memory (for example, a memory) of at least one computer (for example, a computer), causes the at least one computer to perform the above-described method according to the first aspect. The invention may alternatively or additionally relate to a (physical, for example electrical, for example technically generated) signal wave, for example a digital signal wave, carrying information which represents the program, for example the aforementioned program, which for example comprises code means which are adapted to perform any or all of the steps of the method according to the first aspect. A computer program stored on a disc is a data file, and when the file is read out and transmitted it becomes a data stream for example in the form of a (physical, for example electrical, for example technically generated) signal. The signal can be implemented as the signal wave which is described herein. For example, the signal, for example the signal wave is constituted to be transmitted via a computer network, for example LAN, WLAN, WAN, for example the internet. The invention according to the second aspect therefore may alternatively or additionally relate to a data stream representative of the aforementioned program. In a third aspect, the invention is directed to a non-transitory computer-readable program storage medium on which the program according to the fourth aspect is stored.

For example, the invention does not involve or in particular comprise or encompass an invasive step which would represent a substantial physical interference with the body requiring professional medical expertise to be carried out and entailing a substantial health risk even when carried out with the required professional care and expertise. For example, the invention does not comprise a step of positioning a medical implant in order to fasten it to an anatomical structure or a step of fastening the medical implant to the anatomical structure or a step of preparing the anatomical structure for having the medical implant fastened to it. More particularly, the invention does not involve or in particular comprise or encompass any surgical or therapeutic activity. The invention is instead directed as applicable to calibrating a camera model and switching between different medical camera device modes. For this reason alone, no surgical or therapeutic activity and in particular no surgical or therapeutic step is necessitated or implied by carrying out the invention.

### DEFINITIONS

In this section, definitions for specific terminology used in this disclosure are offered which also form part of the present disclosure.

### Computer implemented method

The method in accordance with the invention is for example a computer implemented method. For example, all the steps or merely some of the steps (i.e. less than the total number of steps) of the method in accordance with the invention can be executed by a computer (for example, at least one computer). An embodiment of the computer implemented method is a use of the computer for performing a data processing method. An embodiment of the computer implemented method is a method concerning the operation of the computer such that the computer is operated to perform one, more or all steps of the method.

The computer for example comprises at least one processor and for example at least one memory in order to (technically) process the data, for example electronically and/or optically. The processor being for example made of a substance or composition which is a semiconductor, for example at least partly n- and/or p-doped semiconductor, for example at least one of II-, III-, IV-, V-, VI-semiconductor material, for example (doped) silicon and/or gallium arsenide. The calculating or determining steps described are for example performed by a computer. Determining steps or calculating steps are for example steps of determining data within the framework of the technical method, for example within the framework of a program. A computer is for example any kind of data processing device, for example electronic data processing device. A computer can be a device which is generally thought of as such, for example desktop PCs, notebooks, netbooks, etc., but can also be any programmable apparatus, such as for example a mobile phone or an embedded processor. A computer can for example comprise a system (network) of "sub-computers", wherein each sub-computer represents a computer in its own right. The term "computer" includes a cloud computer, for example a cloud server. The term "cloud computer" includes a cloud computer system which for example comprises a system of at least one cloud computer and for example a plurality of operatively interconnected cloud computers such as a server farm. Such a cloud computer is preferably connected to a wide area network such as the world wide web (WWW) and located in a so-called cloud of computers which are all connected to the world wide web. Such an infrastructure is used for "cloud computing", which describes computation, software, data access and storage services which do not require the end user to know the physical location and/or configuration of the computer delivering a specific service. For example, the term "cloud" is used in this respect as a metaphor for the Internet (world wide web). For example, the cloud provides computing infrastructure as a service (IaaS). The cloud computer can function as a virtual host for an operating system and/or data processing application which is used to execute the method of the invention. The cloud computer is for example an elastic compute cloud (EC2) as provided by Amazon Web Services^{™}. A computer for example comprises interfaces in order to receive or output data and/or perform an analogue-to-digital conversion. The data are for example data which represent physical properties and/or which are generated from technical signals. The technical signals are for example generated by means of (technical) detection devices (such as for example devices for detecting marker devices) and/or (technical) analytical devices (such as for example devices for performing (medical) imaging methods), wherein the technical signals are for example electrical or optical signals. The technical signals for example represent the data received or outputted by the computer. The computer is preferably operatively coupled to a display device which allows information outputted by the computer to be displayed, for example to a user. One example of a display device is a virtual reality device or an augmented reality device (also referred to as virtual reality glasses or augmented reality glasses) which can be used as "goggles" for navigating. A specific example of such augmented reality glasses is Google Glass (a trademark of Google, Inc.). An augmented reality device or a virtual reality device can be used both to input information into the computer by user interaction and to display information outputted by the computer. Another example of a display device would be a standard computer monitor comprising for example a liquid crystal display operatively coupled to the computer for receiving display control data from the computer for generating signals used to display image information content on the display device. A specific embodiment of such a computer monitor is a digital lightbox. An example of such a digital lightbox is Buzz^{®}, a product of Brainlab AG. The monitor may also be the monitor of a portable, for example handheld, device such as a smart phone or personal digital assistant or digital media player.

The invention also relates to a program which, when running on a computer, causes the computer to perform one or more or all of the method steps described herein and/or to a program storage medium on which the program is stored (in particular in a non-transitory form) and/or to a computer comprising said program storage medium and/or to a (physical, for example electrical, for example technically generated) signal wave, for example a digital signal wave, carrying information which represents the program, for example the aforementioned program, which for example comprises code means which are adapted to perform any or all of the method steps described herein.

Within the framework of the invention, computer program elements can be embodied by hardware and/or software (this includes firmware, resident software, micro-code, etc.). Within the framework of the invention, computer program elements can take the form of a computer program product which can be embodied by a computer-usable, for example computer-readable data storage medium comprising computer-usable, for example computer-readable program instructions, "code" or a "computer program" embodied in said data storage medium for use on or in connection with the instruction-executing system. Such a system can be a computer; a computer can be a data processing device comprising means for executing the computer program elements and/or the program in accordance with the invention, for example a data processing device comprising a digital processor (central processing unit or CPU) which executes the computer program elements, and optionally a volatile memory (for example a random access memory or RAM) for storing data used for and/or produced by executing the computer program elements. Within the framework of the present invention, a computer-usable, for example computer-readable data storage medium can be any data storage medium which can include, store, communicate, propagate or transport the program for use on or in connection with the instruction-executing system, apparatus or device. The computer-usable, for example computer-readable data storage medium can for example be, but is not limited to, an electronic, magnetic, optical, electromagnetic, infrared or semiconductor system, apparatus or device or a medium of propagation such as for example the Internet. The computer-usable or computer-readable data storage medium could even for example be paper or another suitable medium onto which the program is printed, since the program could be electronically captured, for example by optically scanning the paper or other suitable medium, and then compiled, interpreted or otherwise processed in a suitable manner. The data storage medium is preferably a non-volatile data storage medium. The computer program product and any software and/or hardware described here form the various means for performing the functions of the invention in the example embodiments. The computer and/or data processing device can for example include a guidance information device which includes means for outputting guidance information. The guidance information can be outputted, for example to a user, visually by a visual indicating means (for example, a monitor and/or a lamp) and/or acoustically by an acoustic indicating means (for example, a loudspeaker and/or a digital speech output device) and/or tactilely by a tactile indicating means (for example, a vibrating element or a vibration element incorporated into an instrument). For the purpose of this document, a computer is a technical computer which for example comprises technical, for example tangible components, for example mechanical and/or electronic components. Any device mentioned as such in this document is a technical and for example tangible device.

### Acquiring data

The expression "acquiring data" for example encompasses (within the framework of a computer implemented method) the scenario in which the data are determined by the computer implemented method or program. Determining data for example encompasses measuring physical quantities and transforming the measured values into data, for example digital data, and/or computing (and e.g. outputting) the data by means of a computer and for example within the framework of the method in accordance with the invention. The meaning of "acquiring data" also for example encompasses the scenario in which the data are received or retrieved by (e.g. input to) the computer implemented method or program, for example from another program, a previous method step or a data storage medium, for example for further processing by the computer implemented method or program. Generation of the data to be acquired may but need not be part of the method in accordance with the invention. The expression "acquiring data" can therefore also for example mean waiting to receive data and/or receiving the data. The received data can for example be inputted via an interface. The expression "acquiring data" can also mean that the computer implemented method or program performs steps in order to (actively) receive or retrieve the data from a data source, for instance a data storage medium (such as for example a ROM, RAM, database, hard drive, etc.), or via the interface (for instance, from another computer or a network). The data acquired by the disclosed method or device, respectively, may be acquired from a database located in a data storage device which is operably to a computer for data transfer between the database and the computer, for example from the database to the computer. The computer acquires the data for use as an input for steps of determining data. The determined data can be output again to the same or another database to be stored for later use. The database or database used for implementing the disclosed method can be located on network data storage device or a network server (for example, a cloud data storage device or a cloud server) or a local data storage device (such as a mass storage device operably connected to at least one computer executing the disclosed method). The data can be made "ready for use" by performing an additional step before the acquiring step. In accordance with this additional step, the data are generated in order to be acquired. The data are for example detected or captured (for example by an analytical device). Alternatively or additionally, the data are inputted in accordance with the additional step, for instance via interfaces. The data generated can for example be inputted (for instance into the computer). In accordance with the additional step (which precedes the acquiring step), the data can also be provided by performing the additional step of storing the data in a data storage medium (such as for example a ROM, RAM, CD and/or hard drive), such that they are ready for use within the framework of the method or program in accordance with the invention. The step of "acquiring data" can therefore also involve commanding a device to obtain and/or provide the data to be acquired. In particular, the acquiring step does not involve an invasive step which would represent a substantial physical interference with the body, requiring professional medical expertise to be carried out and entailing a substantial health risk even when carried out with the required professional care and expertise. In particular, the step of acquiring data, for example determining data, does not involve a surgical step and in particular does not involve a step of treating a human or animal body using surgery or therapy. In order to distinguish the different data used by the present method, the data are denoted (i.e. referred to) as "XY data" and the like and are defined in terms of the information which they describe, which is then preferably referred to as "XY information" and the like.

### Mapping

Mapping describes a transformation (for example, linear transformation) of an element (for example, a pixel or voxel), for example the position of an element, of a first data set in a first coordinate system to an element (for example, a pixel or voxel), for example the position of an element, of a second data set in a second coordinate system (which may have a basis which is different from the basis of the first coordinate system). In one embodiment, the mapping is determined by comparing (for example, matching) the color values (for example grey values) of the respective elements by means of an elastic or rigid fusion algorithm. The mapping is embodied for example by a transformation matrix (such as a matrix defining an affine transformation).

### Elastic fusion, image fusion/morphing, rigid

Image fusion can be elastic image fusion or rigid image fusion. In the case of rigid image fusion, the relative position between the pixels of a 2D image and/or voxels of a 3D image is fixed, while in the case of elastic image fusion, the relative positions are allowed to change.

In this application, the term "image morphing" is also used as an alternative to the term "elastic image fusion", but with the same meaning.

Elastic fusion transformations (for example, elastic image fusion transformations) are for example designed to enable a seamless transition from one dataset (for example a first dataset such as for example a first image) to another dataset (for example a second dataset such as for example a second image). The transformation is for example designed such that one of the first and second datasets (images) is deformed, for example in such a way that corresponding structures (for example, corresponding image elements) are arranged at the same position as in the other of the first and second images. The deformed (transformed) image which is transformed from one of the first and second images is for example as similar as possible to the other of the first and second images. Preferably, (numerical) optimisation algorithms are applied in order to find the transformation which results in an optimum degree of similarity. The degree of similarity is preferably measured by way of a measure of similarity (also referred to in the following as a "similarity measure"). The parameters of the optimisation algorithm are for example vectors of a deformation field. These vectors are determined by the optimisation algorithm in such a way as to result in an optimum degree of similarity. Thus, the optimum degree of similarity represents a condition, for example a constraint, for the optimisation algorithm. The bases of the vectors lie for example at voxel positions of one of the first and second images which is to be transformed, and the tips of the vectors lie at the corresponding voxel positions in the transformed image. A plurality of these vectors is preferably provided, for instance more than twenty or a hundred or a thousand or ten thousand, etc. Preferably, there are (other) constraints on the transformation (deformation), for example in order to avoid pathological deformations (for instance, all the voxels being shifted to the same position by the transformation). These constraints include for example the constraint that the transformation is regular, which for example means that a Jacobian determinant calculated from a matrix of the deformation field (for example, the vector field) is larger than zero, and also the constraint that the transformed (deformed) image is not self-intersecting and for example that the transformed (deformed) image does not comprise faults and/or ruptures. The constraints include for example the constraint that if a regular grid is transformed simultaneously with the image and in a corresponding manner, the grid is not allowed to interfold at any of its locations. The optimising problem is for example solved iteratively, for example by means of an optimisation algorithm which is for example a first-order optimisation algorithm, such as a gradient descent algorithm. Other examples of optimisation algorithms include optimisation algorithms which do not use derivations, such as the downhill simplex algorithm, or algorithms which use higher-order derivatives such as Newton-like algorithms. The optimisation algorithm preferably performs a local optimisation. If there is a plurality of local optima, global algorithms such as simulated annealing or generic algorithms can be used. In the case of linear optimisation problems, the simplex method can for instance be used.

In the steps of the optimisation algorithms, the voxels are for example shifted by a magnitude in a direction such that the degree of similarity is increased. This magnitude is preferably less than a predefined limit, for instance less than one tenth or one hundredth or one thousandth of the diameter of the image, and for example about equal to or less than the distance between neighbouring voxels. Large deformations can be implemented, for example due to a high number of (iteration) steps.

The determined elastic fusion transformation can for example be used to determine a degree of similarity (or similarity measure, see above) between the first and second datasets (first and second images). To this end, the deviation between the elastic fusion transformation and an identity transformation is determined. The degree of deviation can for instance be calculated by determining the difference between the determinant of the elastic fusion transformation and the identity transformation. The higher the deviation, the lower the similarity, hence the degree of deviation can be used to determine a measure of similarity.

A measure of similarity can for example be determined on the basis of a determined correlation between the first and second datasets.

### BRIEF DESCRIPTION OF THE DRAWINGS

In the following, the invention is described with reference to the appended figures which give background explanations and represent specific embodiments of the invention. The scope of the invention is however not limited to the specific features disclosed in the context of the figures, rather the invention is defined by the independent claims. The dependent claims define advantageous embodiments.
- Fig. 1: illustrates a medical camera system;
- Fig. 2: illustrates a image composition device for determining a composite image of a scene in accordance with a first embodiment;
- Fig. 3: illustrates a image composition device for determining a composite image of a scene in accordance with a second embodiment;
- Fig. 4: illustrates an image composition method for determining a composite image of a scene;
- Fig. 5: illustrates a multi-filter camera device;
- Fig. 6: illustrates the timely interleaved light in the multi-filter camera device;
- Fig. 7: illustrates a multi-filter device with a flywheel; and
- Fig. 8: illustrates a multi-filter image processing method for a multi-filter camera device.

### DESCRIPTION OF EMBODIMENTS

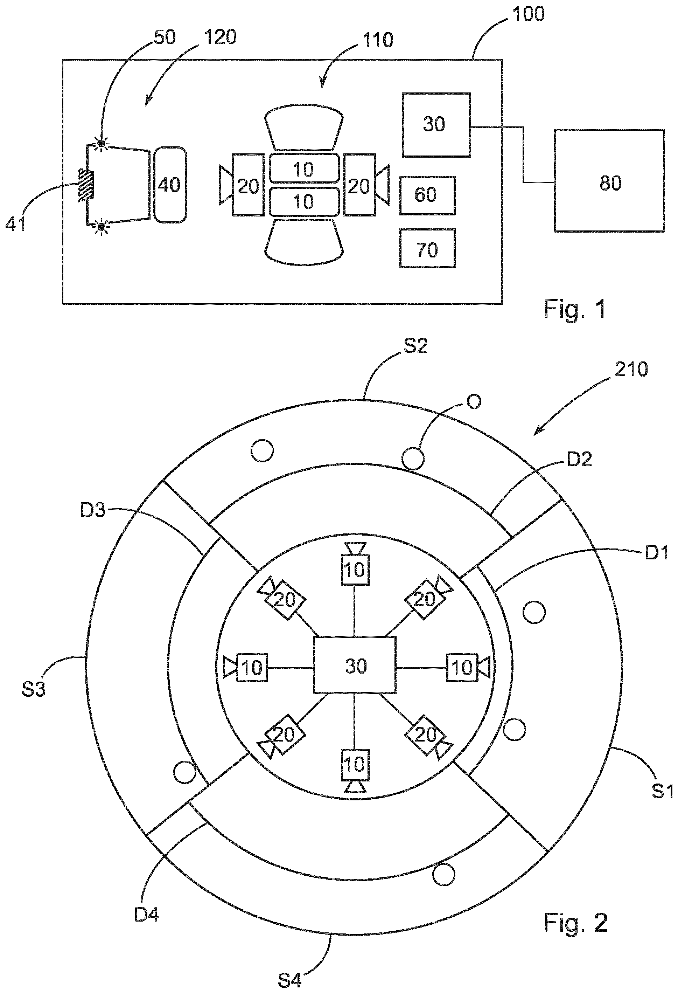

Fig. 1 illustrates a medical camera system 100, which is a multisensory system. The medical camera system 100 in this example has a size that can be described by a volume of about 1000 cm³.

The medical camera system is applied in a medical environment such as an operating room or surgical theatre for monitoring (i.e usage of instruments, tray surveillance, device set-ups/poses, people and their movements), tracking (i.e mono tracking, event/workflow/people tracking, video sources) and/or recording (i.e documentation) tasks. The medical camera system is mainly attached to the ceiling in a fixed position and orientation but could also be mounted on movable support structures, such as on a robotic device.

The medical camera system 100 is configured for acquiring image data of a medical environment. Therefore, the medical camera system comprises at least two camera subsystems. In this case, the at least two camera subsystems comprise a composition image camera device 110 for determining a composite image of a scene and a multi-filter camera device 120.

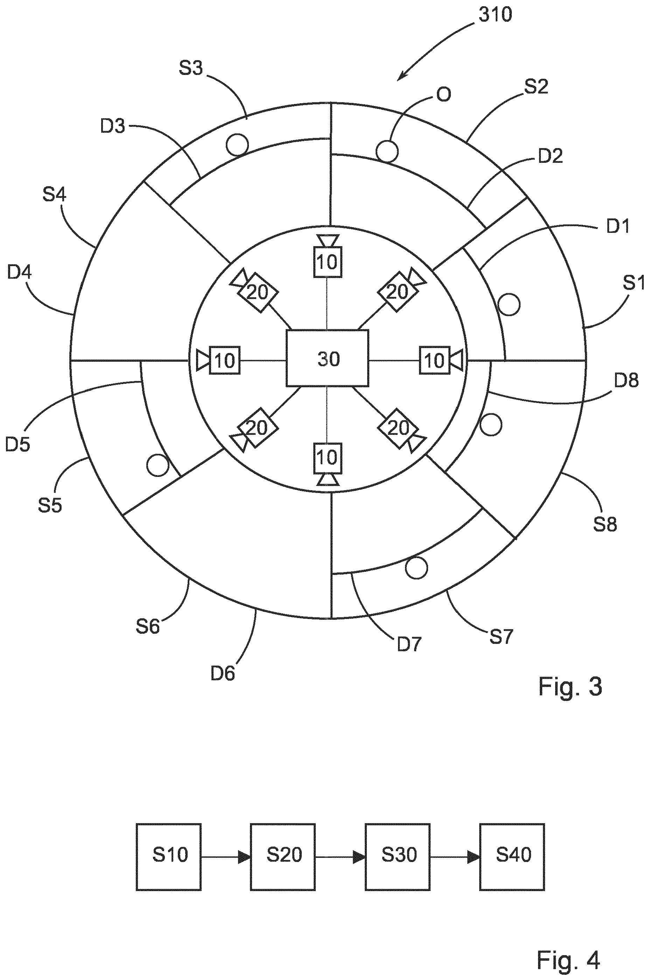

The composition image camera device 110 for determining a composite image of a scene is configured to acquire a 360 degree view and comprises two visible light cameras 10, also referred to as RGB cameras, wherein the image data (e.g. video data) acquired by the RGB cameras are combined via stitching. The composition image camera device 110 for determining a composite image of a scene also comprises two distance sensors 20. The composition image camera device 110 for determining a composite image of a scene is describes in further detail in Figs 2 and 3.

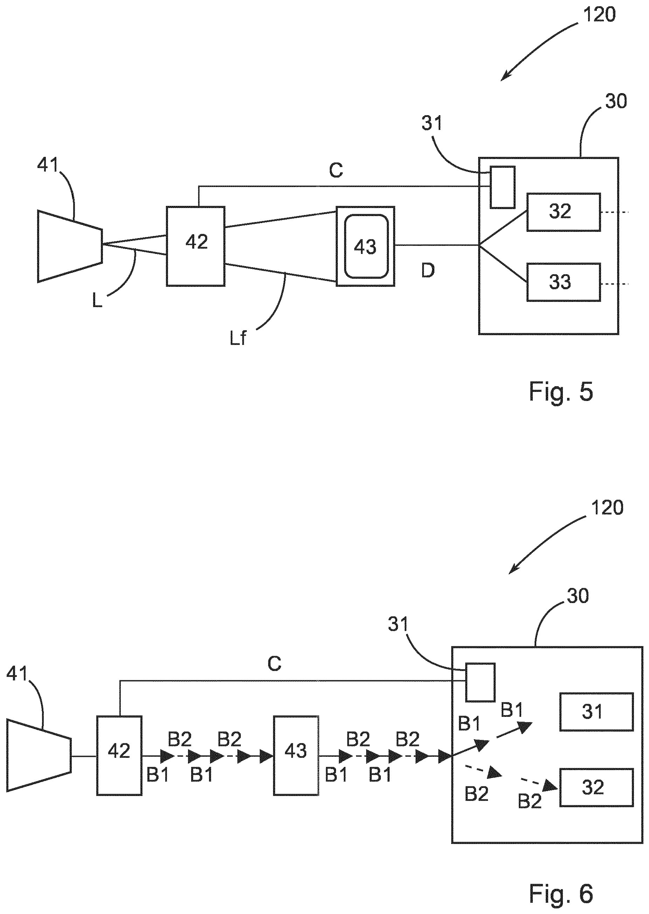

The multi-filter camera device 120 is also referred to as main camera, as this camera is mainly used for monitoring a point of interest in the operation room. The multi-filter camera device 120 comprises a switchable filter for different wavelength bands, in particular for visible light, infrared, near infrared and/or ultraviolet. The multi-filter camera device 120 thus combines RGB image acquisition with 2D image tracking. In this example, the multi-filter camera device comprises a lens 41 for collecting visible light and non-visible light. The non-visible light for example is infrared light that has been reflected by a tracked object, wherein the tracked objected has been illuminated by infrared light by infrared sources 50 of the multi-filter camera device 120. The multi-filter camera device 120 is described in further detail in Figs. 5 to 7.

The medical camera system 100 comprises a processing device 30 to implement the functionalities of the composition image camera device 110 for determining a composite image of a scene and the multi-filter camera device 120. The processing device 30 can also be supported externally, i.e. by a cloud, fog and/or edge device 80.

In this example, the medical camera system 100 comprises some optional additional components:
An inertial measurement unit, IMU, 70 (e.g. a three axis accelerometer, a gyroscope, etc., in particular 3 gyros + 3 accelerometers) configured to determine the orientation of the medical camera system (e.g. to adjust the horizon of the first and/or second camera subsystem).

A microphone 60, or a microphone array with up to 6 microphones or a directional microphone.

A light projector for projecting lines and points onto the patient, e.g. based on an anatomical object, or based on user input, or remote user input (e.g. telestration).

A third camera device, e.g. on a crane, a lever arm, a rail, or wireless, configured to be oriented towards a Region of Interest, in particular the same region of interest as the second camera system.

A pre-processor in the common housing of the first and second camera subsystem, the pre-processor is configured to perform image processing on the raw data, e.g. edge detection, compression, segmentation, classification, optionally based on AI (background: streaming bandwidth is limited; on-device compression/pre-processing would only stream the relevant data instead of the raw image data, e.g. the processor selects the ROI and only forwards image data related to the ROIs, see also virtual cameras).

An external ROI camera, which is separate highly zoomed, and is a fix focus camera on flexible arm to focus on specific region as of interest, e.g. surgical tray.

A digital zoom to 360° view with different trigger to set the zoom and position in dependence of sound, person movement or conference.

A voice or gesture control, e.g. start/stop recordings.

A user interface, e.g. touch screen or touch field on the camera to define where to look at.

The medical camera system 100 thus provides multisensory applications in the medical field.

Fig. 2 illustrates a composite camera device 210 for determining a composite image of a scene in accordance with a first embodiment in line with the composite camera device 110 of Fig. 1. The composite camera device 210 comprises four visible light cameras 10 and four distance sensors 20, which provide image data to a processing device 30. The four visible light cameras 10 and the four distance sensors 20 are disposed interleaved in a circle to cover a 360 degree view of a scene. In the 360 degree view, a plurality of objects O, marked by a circle, recognized. Each of the four distance sensors 20 cover a distance section S1-S4 of 90 degrees and provide the processing device 30 with distance information regarding a nearest object of the plurality of objects O within the respective distance section S1-S4. In other words, each of the four distance sensors 20 provide a distance information D1-D4 to the processing device 30. The provided distance information D1-D4 is then used by the processing device 30 to calibrate a camera model of the four visible light cameras 10 to reduce parallax an the respective distance provided by the distance information D1-D4 in the respective distance section S1-S4. As can be seen from distance section S2, only the nearest object O in a distance section S1-S4 is relevant for the distance sensors 20.

This allows the processing device 30 to calibrate the camera model of the four visible light cameras 10 more precisely depending on the environment. This allows for an improved composition of an image of the scene based on the images provided by each of the four visible light cameras 10.

Fig. 3 illustrates a composite camera device 310 for determining a composite image of a scene in accordance with a second embodiment, in line with the composite camera device 110 of Fig. 1.

Compared to the composite camera device 310 of Fig. 2 each of the four distance sensors 10 has a resolution of 2x2 and as such provides two distance information of two distance sections. As such, the processing device 30 is provided with eight distance information D1-D8 from eight distance sections S1-S8 each covering 45 degree of the 360 degree view.

Fig. 3 also indicates that if there are no objects O detected in a distance section, for example S4 and S6, the respective distance information comprises the distance between the respective distance sensor 20 and the end of the room, like a floor or a wall.

Fig. 4 illustrates a method for determining a composite image of a scene comprises the following steps. A first step S10 comprises obtaining S10, by each of a plurality of visible light cameras 10, covering a 360 degree view of the scene, an image of the scene. A second step S20 comprises obtaining, by each of a plurality of distance sensors 20 covering a plurality of distance sections S1, S2 of a 360 degree view of the scene, a distance information D1, D2 to a nearest object O from the respective distance sensor 20 for at least one of the plurality of distance sections S1, S2. A third step S30 comprises calibrating, by a processing device, for each of the plurality of distance sections S1, S2 a camera model of one of the plurality of visible light cameras 10 using the respective determined distance information D1, D2. A fourth step S40 comprises determining, by the processing device, a composite image of the scene using the calibrated camera models for each of the plurality of distance sections S1, S2 and the image of the scene from each of the plurality of visible light cameras.

Fig. 5 illustrates the multi-filter camera device 120. The multi-filter camera device 120 comprises a processing device 30, an input optics in form of a lens 41, a multi-filter device 42 and an image sensor 43. The processing device 30 comprises a sequencer device 31, a first video pipeline 32 and a second video pipeline 33.

The lens 41 is configured to collect light L reflected from a scene. The scene in this case comprises a three dimensional view of an area, in particular an operation room.

The scene is also referred to as area of interest, which is monitored by a camera system 100. The camera system 100 comprises the multi-filter camera device 120.

The multi-filter device 42 is configured to determine filtered light Lf from the collected light L. The filtered light Lf comprises timely interleaved light of two wavelength bands, a first wavelength band and a second wavelength band. In other words, the multi-filter device 42 comprises a first filter and a second filter, wherein the first filter is configured to filter the collected light L with the first wavelength band and the second filter is configured to filter the collected light L with the second wavelength band. The multi-filter device 42 is configured to filter the collected light L with one of the two filters at a time. Thus, the filtered light Lf comprises a light beam with timely interleaved light of the two wavelength bands. In other words, the multi-filter device 42 filters the collected light L with the first filter for the first wavelength band for a first time window and filters the collected light L with the second filter for the second wavelength bands for a second time window. Thus, the multi-filter device 42 is configured to switch between filters and as such to switch between filtering the collected light L with the first wavelength band and the second wavelength band. The multi-filter device 42 provides the filtered light Lf to the image sensor 43.

The image sensor 43 is configured to determine image data D from the filtered light Lf, wherein the image data D comprises timely interleaved image data corresponding to the at least two wavelength bands. In other words, the image sensor 43 is configured to transform the filtered light Lf of any one of the at least two wavelength bands to respective image data D. The image sensor 43 thus digitalizes the filtered light Lf into the image data D and provides the image data D to the processing device 30 for further processing.

The processing device 30 is configured to process the image data D. The first video pipeline 32 is configured to process the image data D corresponding to the first wavelength band. The second video pipeline 33 is configured to process the image data D corresponding to the second wavelength band. The sequencer device 31 is configured to timely distribute the image data D to first video pipeline 32 and the second video pipelines 33. In other words, the sequencer device 31 is configured to provide the image data D corresponding to the first wavelength band to the first video pipeline 32 in a first time window and to provide the image data D corresponding to the second wavelength band to the second video pipelines 33 in a second time window.

The first video pipeline 32 and the second video pipeline 33 determine a video, i.e. images over time, of the scene.

The sequencer device 31 is configured to control the multi-filter device 42 to use the respective first filter or second filter in line with the distribution of the first image data and the second image data respectively provided by the image sensor 43 to the first video pipeline 32 and the second video pipeline 33, respectively. Thus, the sequencer device 31 uses control data C to make sure that the multi-filter device uses the filter with the right wavelength band on the collected light L so that the first video pipeline 32 and the second video pipeline 33 are only provided with image data D corresponding to the wavelength band the respective video pipeline is configured to process.

This allows to provide a real-time medical camera device supporting different wavelength bands.

Fig. 6 illustrates the multi-filter camera device 120 of fig. 5. However, fig. 6 also illustrates the timely interleaved light with the first wavelength band B1 and the second wavelength band B2. Fig. 6 thus illustrates that the image data corresponding to the first wavelength band B1 is only provided to the first video pipeline 31 and that the image data corresponding to the second wavelength band B2 is only provided to the second video pipeline 32.

The filtered light Lf is a beam of light with timely interleaved wavelength bands, namely the first wavelength band B1 and the second wavelength band B2. Thus, when distributing the respective image data to the first video pipeline 31 and the second video pipeline 32, image data is either provided to the first video pipeline 31 or the second video pipeline 32 but never at the same time. This leaves blind spots for each of the video pipelines 31, 32. In an example, the first wavelength band B1 relates to visible light and the second wavelength band B2 relates to infrared light. The first wavelength band B1 is used for providing an RGB video of the scene to the user, while the second wavelength band B2 is rather used for tracking objects via an infrared video (or other special light application e.g. fluoroscopy). Consequently, the multi-filter device 42 is controlled to filter the collected light L with the first wavelength band B1 significant longer than to filter the collected light L with the second wavelength band B2. Thus, the blind spot for the RGB video is relatively small and still the tracking function of the infrared video is provided.

This allows to provide a real-time medical camera device supporting different wavelength bands.

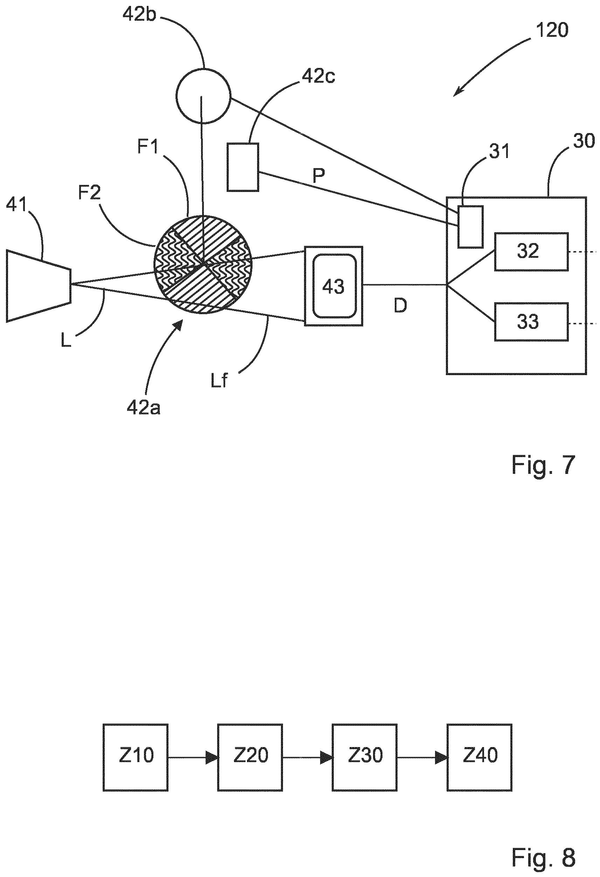

Fig. 7 illustrates the multi filter camera device 120 of fig. 5. However, the multi-filter device 42 is implemented by a rotatable flywheel 42a. The rotatable flywheel 42a has a shape of a circle and comprises a plurality of sections around the flywheel 42a. Each of the sections of the flywheel 42a is provided with a filter. In this case, the flywheel 42a comprises four sections and as such four filters, namely two times the first filter F1 and the two times the second filter F2, being arranged interleaved around the flywheel 42a.

The multi-filter device 42 comprises a motor 42b, which is configured to rotate the flywheel 42a. The sequencer device 31 is configured to control the motor 42b. Furthermore, the multi-filter device 42 comprises a position sensor 42c. The position sensor 42c is configured to determine a position P of the flywheel 42a, or in other words, which filter of the first filter F1 or the second filter F2 is currently filtering the collected light L. The position P of the flywheel 42a also contains information about the location of each of the filters of the flywheel 42a to the beam of the collected light L. Thus, the sequencer device 31 can use the position of the flywheel 42a to either control the motor 42b and/or control the distribution of the image data to the first video pipeline 32 and the second video pipeline 33.

Fig. 8 illustrates a multi-filter image processing method for a multi-filter camera device 120.

A first step Z10 comprises collecting Z10, by a lens 41, light reflected from a scene. A second step Z20 comprises determining, by a multi-filter device 42, filtered light Lf from the collected light, wherein the filtered light Lf comprises timely interleaved light of at least two wavelength bands B1, B2. A third step Z30 comprises determining, by an image sensor 43, image data D from the filtered light Lf, wherein the image data D comprises timely interleaved image data corresponding to the at least two wavelength bands B1, B2. A fourth step Z40 comprises processing, by a processing device 30, the image data D, wherein processing comprises timely managing, by a sequencer device 31, the image data D and at least one video pipeline 32, 33 of the processing device 30, wherein the at least one video pipeline 32, 33 processes image data D corresponding to at least one of the at least two wavelength bands B1, B2.

## Claims

1. A composite camera device for determining a composite image of a scene, comprising:
a plurality of visible light cameras (10), covering a 360 degree view of the scene, wherein each of the plurality of visible light cameras (10) is configured to determine an image of the scene;
a plurality of distance sensors (20), covering a plurality of distance sections (S1, S2) of a 360 degree view of the scene, wherein each of the plurality of distance sensors (20) is configured to determine a distance information (D1, D2) to a nearest object (O) from the respective distance sensor (20) for at least one of the plurality of distance sections (S1, S2);
a processing device (30), configured to:
calibrate a camera model of one of the plurality of visible light cameras (10) using the respective determined distance information (D1, D2) for each of the plurality of distance sections (S1, S2); and
determining a composite image of the scene using the calibrated camera models for each of the plurality of distance sections (S1, S2) and the image of the scene from each of the plurality of visible light cameras.

2. The device of claim 1,
wherein calibrating the camera model comprises:
obtaining a plurality of camera models, being statically pre-calibrated for different distances;
selecting, for each of the plurality of distance sections (S1, S2), a selected camera model of the plurality of camera models based on the determined distance information (D1, D2) of the respective distance section (S1, S2).

3. The device of claim 1,
wherein calibrating the camera model comprises:
obtaining a parameterizable calibrated model;
parametrizing, for each of the plurality of distance section (S1, S2), a parametrizable calibrated model based on the determined distance information (D1, D2) of the respective distance section (S1, S2).

4. The device of any one of the preceding claims,
wherein the camera model comprises an intrinsic compensation model and an extrinsic compensation model.

5. The device of any one of the preceding claims,
wherein the at least one distance sensor (20) is a low resolution distance sensor, wherein preferably the low resolution distance sensor (20) has a resolution of one of 4x4, 2x2 or 1x1.

6. The device of any one of the preceding claims,
wherein an amount of the plurality of visible light cameras (10) is smaller than an amount of the at least one distance sensor (20); wherein the amount of the at least one distance sensors is bigger than one.

7. The device of any one of the preceding claims,
wherein the plurality of distance sensor are arranged interleaved to the plurality of visible light cameras (10).

8. The device of any one of the preceding claims,
wherein the plurality of distance sensors (20) comprise one of a Time of Flight sensor and a LIDAR sensor.

9. The device of any one of the preceding claims,
wherein the processing device (30) is configured to calibrate the camera model and to determine the composite image in a predetermined time cycle.

10. The device of any one of the preceding claims,
wherein the plurality of visible light cameras (10) are large field-of-view cameras.

11. The device of claim 10,
wherein each of the large field-of-view cameras comprise a field-of-view that is at least 160 degrees.

12. The device of claims 10 or 11,
wherein the large field-of-view cameras comprise a camera with a fisheye lens.

13. The device of any one of the preceding claims,
wherein the processing device (30) comprises a hardware processing device .

14. A method for determining a composite image of a scene, comprising the steps:
obtaining (S10), by each of a plurality of visible light cameras (10), covering a 360 degree view of the scene, an image of the scene;
obtaining (S20), by each of a plurality of distance sensors (20) covering a plurality of distance sections (S1, S2) of a 360 degree view of the scene, a distance information (D1, D2) to a nearest object (O) from the respective distance sensor (20) for at least one of the plurality of distance sections (S1, S2);
calibrating (S30), by a processing device, for each of the plurality of distance sections (S1, S2) a camera model of one of the plurality of visible light cameras (10) using the respective determined distance information (D1, D2);
and
determining (S40), by the processing device, a composite image of the scene using the calibrated camera models for each of the plurality of distance sections (S1, S2) and the image of the scene from each of the plurality of visible light cameras.

15. Multi camera system comprising:
the composite image camera device of any one of claims 1-13.

## Patentansprüche

1. Eine Composite-Kameravorrichtung zum Bestimmen eines Composite-Bildes einer Szene, umfassend:
eine Vielzahl von Kameras (10) für sichtbares Licht, die einen 360-Grad-Blickwinkel der Szene abdecken, wobei jede der Vielzahl von Kameras (10) für sichtbares Licht dazu eingerichtet ist, ein Bild der Szene zu bestimmen;
eine Vielzahl von Entfernungssensoren (20), die eine Vielzahl von Entfernungsabschnitten (S1, S2) einer 360-Grad-Ansicht der Szene abdecken, wobei jeder der mehrere Entfernungssensoren (20) dazu eingerichtet ist, eine Entfernungsinformation (D1, D2) zu einem nächstgelegenen Objekt (O) vom jeweiligen Entfernungssensor (20) für mindestens einen der mehreren Entfernungsabschnitte (S1, S2) zu bestimmen;
eine Verarbeitungsvorrichtung (30), die dazu eingerichtet ist,
ein Kameramodell einer der Vielzahl der Kameras (10) für sichtbares Licht unter Verwendung der jeweils bestimmten Entfernungsinformationen (D1, D2) für jeden der Vielzahl der Entfernungsabschnitte (S1, S2) zu kalibrieren; und
ein zusammengesetztes Bild der Szene unter Verwendung der kalibrierten Kameramodelle für jeden der mehreren Entfernungsabschnitte (S1, S2) und das Bild der Szene von jeder der mehreren Kameras für sichtbares Licht zu bestimmen.

2. Die Vorrichtung nach Anspruch 1,
wobei das Kalibrieren des Kameramodells umfasst:
Erhalten einer Vielzahl von Kameramodellen, die statisch für verschiedene Entfernungen vorkalibriert sind;
Auswählen eines ausgewählten Kameramodells aus der Vielzahl von Kameramodellen für jeden der mehreren Entfernungsabschnitte (S1, S2) basierend auf den bestimmten Entfernungsinformationen (D1, D2) des jeweiligen Entfernungsabschnitts (S1, S2).

3. Die Vorrichtung nach Anspruch 1,
wobei das Kalibrieren des Kameramodells umfasst:
Erhalten eines parametrisierbaren kalibrierten Modells;
Parametrisieren eines parametrisierbaren kalibrierten Modells für jede Anzahl der Entfernungsabschnitte (S1, S2) basierend auf den bestimmten Entfernungsinformationen (D1, D2) des jeweiligen Entfernungsabschnitts (S1, S2).

4. Die Vorrichtung nach einem der vorangehenden Ansprüche,
wobei das Kameramodell ein intrinsisches Kompensationsmodell und ein extrinsisches Kompensationsmodell umfasst.

5. Die Vorrichtung nach einem der vorangehenden Ansprüche,
wobei der mindestens eine Abstandssensor (20) ein Abstandssensor mit niedriger Auflösung ist, wobei der Abstandssensor mit niedriger Auflösung (20) vorzugsweise eine Auflösung von 4x4, 2x2 oder 1x1 aufweist.

6. Die Vorrichtung nach einem der vorangehenden Ansprüche,
wobei die Anzahl der Vielzahl der Kameras (10) für sichtbares Licht kleiner ist als die Anzahl des mindestens einen Abstandssensors (20); wobei die Anzahl der mindestens einen Abstandssensoren größer als eins ist.

7. Die Vorrichtung nach einem der vorangehenden Ansprüche,
wobei die Vielzahl der Entfernungssensoren in Versatz zur Anzahl der Kameras für sichtbares Licht (10) angeordnet ist.

8. Die Vorrichtung nach einem der vorangehenden Ansprüche,
wobei die Vielzahl der Entfernungssensoren (20) einen Zeit-of-Flight-Sensor oder einen LIDAR-Sensor umfasst.

9. Die Vorrichtung nach einem der vorangehenden Ansprüche,
wobei die Verarbeitungsvorrichtung (30) so eingerichtet ist, dass sie das Kameramodell kalibriert und das zusammengesetzte Bild in einem vorbestimmten Zeitzyklus bestimmt.

10. Die Vorrichtung nach einem der vorangehenden Ansprüche,
wobei die Vielzahl der Kameras für sichtbares Licht (10) Kameras mit großem Sichtfeld sind.

11. Die Vorrichtung nach Anspruch 10,
wobei jede der Weitwinkelkameras ein Sichtfeld von mindestens 160 Grad umfasst.

12. Die Vorrichtung nach Anspruch 10 oder 11,
wobei die Weitwinkelkameras eine Kamera mit einem Fischaugenobjektiv umfassen.

13. Die Vorrichtung nach einem der vorangehenden Ansprüche,
wobei die Verarbeitungsvorrichtung (30) eine Hardware-Verarbeitungsvorrichtung umfasst.

14. Ein Verfahren zum Bestimmen eines Composite-Bildes einer Szene, das die folgenden Schritte umfasst:
Erfassen (S10) eines Bildes der Szene durch jede einer Vielzahl von Kameras (10) für sichtbares Licht, die einen 360-Grad-Blickwinkel der Szene abdecken;
Erfassen (S20) einer Entfernungsinformation (D1, D2) zu einem nächstgelegenen Objekt (O) von dem jeweiligen Entfernungssensor (20) für mindestens einen der mehrere Entfernungsabschnitte (S1, S2) durch jede der Vielzahl von Entfernungssensoren (20), die eine Vielzahl von Entfernungsabschnitten (S1, S2) einer 360-Grad-Ansicht der Szene abdecken;
Kalibrieren (S30) durch eine Verarbeitungsvorrichtung für jeden der Anzahl der Entfernungsabschnitte (S1, S2) eines Kameramodells einer der Anzahl der sichtbaren Lichtkameras (10) unter Verwendung der jeweiligen bestimmten Entfernungsinformation (D1, D2); und
Bestimmen (S40) eines Composite-Bildes der Szene durch die Verarbeitungsvorrichtung unter Verwendung der kalibrierten Kameramodelle für jeden der Anzahl der Entfernungsabschnitte (S1, S2) und des Bildes der Szene von jeder der Anzahl der Kameras für sichtbares Licht.

15. Ein Mehrkamerasystem, umfassend:
die Composite-Kameravorrichtung nach einem der Ansprüche 1 bis 13.

## Revendications

1. Dispositif de caméras composites pour déterminer une image composite d'une scène, comprenant :
une pluralité de caméras à lumière visible (10) couvrant une vue à 360 degrés de la scène, dans lequel chacune de la pluralité de caméras à lumière visible (10) est configurée pour déterminer une image de la scène ;
une pluralité de capteurs de distance (20) couvrant une pluralité de sections de distance (S1, S2) d'une vue à 360 degrés de la scène, dans lequel chacun de la pluralité de capteurs de distance (20) est configuré pour déterminer une information de distance (D1, D2) à un objet le plus proche (O) à partir du capteur de distance respectif (20) pour au moins une de la pluralité de sections de distance (S1, S2) ;
un dispositif de traitement (30) configuré pour :
calibrer un modèle de caméra de l'une de la pluralité de caméras à lumière visible (10) en utilisant l'information de distance respective déterminée (D1, D2) pour chacune de la pluralité de sections de distance (S1, S2) ; et
déterminer une image composite de la scène en utilisant les modèles de caméra calibrés pour chacune de la pluralité de sections de distance (S1, S2) et l'image de la scène provenant de chacune de la pluralité de caméras à lumière visible.

2. Dispositif selon la revendication 1,
dans lequel calibrer le modèle de caméra comprend les opérations consistant à :
obtenir une pluralité de modèles de caméra, pré-calibrés de manière statique pour différentes distances ;
sélectionner, pour chacune de la pluralité de sections de distance (S1, S2), un modèle de caméra sélectionné de la pluralité de modèles de caméra sur la base de l'information de distance déterminée (D1, D2) de la section de distance respective (S1, S2).

3. Dispositif selon la revendication 1,
dans lequel calibrer le modèle de caméra comprend les opérations consistant à :
obtenir un modèle calibré paramétrable ;
paramétrer, pour chacune de la pluralité de sections de distance (S1, S2), un modèle calibré paramétrable sur la base de l'information de distance déterminée (D1, D2) de la section de distance respective (S1, S2).

4. Dispositif selon l'une quelconque des revendications précédentes,
dans lequel le modèle de caméra comprend un modèle de compensation intrinsèque et un modèle de compensation extrinsèque.

5. Dispositif selon l'une quelconque des revendications précédentes,
dans lequel ledit au moins un capteur de distance (20) est un capteur de distance à faible résolution, dans lequel de préférence le capteur de distance à faible résolution (20) a une résolution de 4×4, 2×2 ou 1×1.

6. Dispositif selon l'une quelconque des revendications précédentes,
dans lequel le nombre de la pluralité de caméras à lumière visible (10) est inférieur au nombre de la pluralité de capteurs de distance (20) ; dans lequel le nombre de la pluralité de capteurs de distance est supérieur à un.

7. Dispositif selon l'une quelconque des revendications précédentes,
dans lequel la pluralité de capteurs de distance sont disposés en alternance avec la pluralité de caméras à lumière visible (10).

8. Dispositif selon l'une quelconque des revendications précédentes,
dans lequel la pluralité de capteurs de distance (20) comprend l'un d'un capteur à temps de vol et d'un capteur LIDAR.

9. Dispositif selon l'une quelconque des revendications précédentes,
dans lequel le dispositif de traitement (30) est configuré pour calibrer le modèle de caméra et pour déterminer l'image composite dans un cycle de temps prédéterminé.

10. Dispositif selon l'une quelconque des revendications précédentes,
dans lequel la pluralité de caméras à lumière visible (10) sont des caméras à grand champ de vision.

11. Dispositif selon la revendication 10,
dans lequel chacune des caméras à grand champ de vision comprend un champ de vision d'au moins 160 degrés.

12. Dispositif selon les revendications 10 ou 11,
dans lequel les caméras à grand champ de vision comprennent une caméra avec un objectif fisheye.

13. Dispositif selon l'une quelconque des revendications précédentes,
dans lequel le dispositif de traitement (30) comprend un dispositif de traitement matériel.

14. Procédé pour déterminer une image composite d'une scène, comprenant les étapes consistant à :
obtenir (S10), par chacune d'une pluralité de caméras à lumière visible (10) couvrant une vue à 360 degrés de la scène, une image de la scène ;
obtenir (S20), par chacun d'une pluralité de capteurs de distance (20) couvrant une pluralité de sections de distance (S1, S2) d'une vue à 360 degrés de la scène, une information de distance (D1, D2) à un objet le plus proche (O) à partir du capteur de distance respectif (20) pour au moins une de la pluralité de sections de distance (S1, S2) ;
calibrer (S30), par un dispositif de traitement, pour chacune de la pluralité de sections de distance (S1, S2), un modèle de caméra de l'une de la pluralité de caméras à lumière visible (10) en utilisant l'information de distance respective déterminée (D1, D2) ; et
déterminer (S40), par le dispositif de traitement, une image composite de la scène en utilisant les modèles de caméra calibrés pour chacune de la pluralité de sections de distance (S1, S2) et l'image de la scène provenant de chacune de la pluralité de caméras à lumière visible.

15. Système multi-caméras comprenant :
le dispositif de caméras à image composite selon l'une quelconque des revendications 1 à 13.
